# FASCICULE DE BREVET EUROPEEN

(11) **EP 0 952 888 B1**
(45) Date de publication et mention de la délivrance du brevet: **10.09.2003**
(21) Numéro de dépôt: 97913278.4
(22) Date de dépôt: 07.11.1997
(51) Int. Cl.: B01J 27/188, B01J 35/10, C10G 45/08

(54) **CATALYSEUR CONTENANT DU PHOSPHORE ET PROCEDE D'HYDROTRAITEMENT DE CHARGES PETROLIERES AVEC CE CATALYSEUR**
Phosphorhaltiger Katalysator und Hydrotreating-Verfahren zu seiner Verwendung
CATALYST CONTAINING PHOSPHORUS AND METHOD FOR HYDRO-TREATING OIL FEEDSTOCKS WITH THIS CATALYST

(30) Priorité: 13.11.1996 FR 9613797
(43) Date de publication de la demande: 03.11.1999
(73) Titulaire: INSTITUT FRANCAIS DU PETROLE, 92506 Rueil-Malmaison (FR)
(72) Inventeur: MIGNARD, Samuel, 92500 Rueil-Malmaison (FR); GEORGE-MARCHAL, Nathalie, F-69230 St Genis Laval (FR); HARLE, Virginie, F-60260 Lamorlaye (FR); KASZTELAN, Slavik, F-92500 Rueil Malmaison (FR)
(86) Numéro de dépôt international: FR9702006
(87) Numéro de publication internationale: WO98020969

(56) Documents cités:
- EP-A- 0 338 788
- EP-A- 0 469 675
- EP-A- 0 526 988
- US-A- 4 752 376
- US-A- 4 940 530
- US-A- 4 941 964
- US-A- 5 498 586

## Description

La présente invention concerne un catalyseur d'hydrotraitement de charge pétrolières hydrocarbonées comprenant du cobalt, du molybdène et du phosphore

L'hydrotraitement des coupes pétrolières prend une importance de plus en plus grande dans la pratique du raffinage d'une part avec la nécessité croissante de conversion de fractions de plus en plus lourdes et d'autre part avec une sévérisation des spécifications pour les produits finis.

Cet état de fait tient à l'intérêt économique de valoriser au mieux des bruts importés de plus en plus riches en fractions lourdes qui présentent d'une part un déficit relatif en hydrogène dans ces fractions lourdes ou les fractions plus légères qui en sont issues et d'autre part une teneur élevée en hétéro-atomes tels que le soufre et l'azote.

L'hydrotraitement, d'une façon générale, est une purification de coupes pétrolières hydrocarbonées sans modification notoire du squelette décrit par les atomes de carbone. Ainsi, il comprend l'élimination des hétéro-atomes tels que le soufre et l'azote, l'élimination des métaux ainsi que l'hydrogénation partielle ou totale. Lorsque cela s'avère nécessaire, la coupe pétrolières est hydrotraitée puis débarassée des produits formés ce qui permet de récupérer une coupe pétrolières purifiée.

La "profondeur" de l'hydrotraitement est directement liée aux conditions opératoires. Par conditions opératoires, il faut entendre la nature de la charge, la pression totale dans la zone réactionnelle, les pressions partielles des divers composés, la température de réaction, la vitesse volumique horaire et le débit d'hydrogène. D'une façon générale, plus la charge est lourde et/ou difficile à convertir, plus les conditions opératoires seront sévères c'est à dire que-les pressions, température et débit d'hydrogène seront élevées tandis que la vitesse volumique horaire sera faible.

Le document EP 0 526 988 décrit un procédé et un catalyseur d'hydrotraitement. Le catalyseur comprend 1-6% poids d'oxyde d'un métal du groupe VIII (Ni ou Co préféré), 10-25% poids d'oxyde d'un métal du groupe VI (W ou Mo préféré) et 1-6% poids d'oxyde de P sur un support d'alumine. Il présente une surface spécifique de 160-210 m²/g, un volume poreux total de 0,5-0,65 cm³/g et une répartition poreuse où 70 - 85 % du volume poreux total est dans les pores de diamètre 10-13 nm.

Les travaux de recherche effectués par la demanderesse sur de nombreux supports de compositions variées, l'ont conduite à découvrir que, de façon surprenante, un catalyseur à base d'alumine contenant, exprimés en teneurs pondérales en oxydes, 2-10% poids d'oxyde de cobalt CoO, de 10-30% poids d'oxyde de molybdène MoO₃ et de 4-10% d'oxyde de phosphore P₂O₅ et qui de préférence présente des caractéristiques physico-chimiques particulières, présentait une activité d'hydrotraitement très supérieure à celles des formulations de l'art antérieur.

La matrice utilisée est à base d'alumine (au moins 50% poids d'alumine), et de préférence essentiellement constituée d'alumine.

Le catalyseur est caractérisé en ce que la teneur en phosphore, exprimée en pourcentage poids de pentaoxyde de diphosphore P₂O₅, par rapport au catalyseur fini, est comprise entre 4,0% et 10,0% et de préférence entre 4,5% et 8,0% et de manière encore plus préférée entre 5,6% et 8,0% ou 5,6% et 6,5%. Il est caractérisé en ce que la teneur en cobalt, exprimée en pourcent poids d'oxyde de cobalt CoO par rapport-au ceatalyseur fini, est comprise entre 2,0% et 10,0% et de préférence entre 3,5% et 7,0% et de manière encore plus préférée entre 3,5% et 5,5%. Il est caractérisé en ce que la teneur en molybdène, exprimée en oxyde de molybdène MoO₃ par rapport au catalyseur fini, est comprise entre 10% et 30%, avantageusement entre 10,0% et 18,9% et de préférence entre 15,0% et 18,9% et de manière encore plus préférée entre 16,0% et 18,5%

Le catalyeur est également caractérisé par :
Surface BET : la surface BET, mesurée sur le catalyseur fini, est comprise entre 100 et 300m²/g et de préférence entre 120 et 250m²/g et de manière encore plus plus préférée entre 130 et 240m²/g.
ESH : l'écrasement Shell, appelé ESH, mesuré sur le catalyseur fini, est supérieur à 1.4MPa et de manière préférée supérieur à 1.6MPa.
Diamètre moyen des pores : le diamètre moyen des pores est mesuré à partir du profil de répartition poreuse obtenu à l'aide d'un porosimètre au mercure. A partir de la courbe de répartition poreuse, on calcule la courbé dérivée. Cette dérivée passe par un ou plusieurs maxima dont l'abscisse donne le diamètre des pores. Le catalyseur revendiqué est tel que, la ou les maxima sont obtenus pour un diamètre ou des diamètres de pore compris entre 80Å et 110Å (10Å=1nm) et de préférence entre 95Å et 110Å de manière encore plus préférée entre 100Å et 110Â.
Volume poreux des pores inférieurs à 80Å : le volume poreux des pores dont le diamètre est inférieur à 80Å au plus égal à 0,05ml/g et de préférence au plus égal à 0,035ml/g et de manière encore plus préférée au plus égal à 0,025ml/g.
Volume poreux des pores supérieurs à 140Å : le volume poreux des pores dont le diamètre est supérieur à 140Å est inférieur à 0,08ml/g et de préférence inférieur à 0,06ml/g et de manière encore plus préférée inférieur à 0,05ml/g. Il n'y a pratiquement pas de pores au-dessus de 250Å, plus généralement leur volume poreux est inférieur à 10 % du volume poreux total, ou mieux inférieur à 8 %.
Volume poreux des pores compris entre 80Å et 140Å : le volume poreux des pores dont le diamètre est compris entre 80Å et 140Å est compris entre 0,20 ml/g et 0,80 ml/g et de préférence entre 0,30 et 0,70 ml/g et 20-60 % du volume poreux total est dans les pores de diamètre 100-130Å

Le catalyseur de la présente invention peut être préparé par toutes les méthodes bien connues de l'homme du métier.

L'élément hydrogénant est introduit lors du mélange, ou encore après mise en forme (préféré).

La mise en forme est suivie d'une calcination, l'élément hydrogénant est introduit avant ou après cette calcination. La préparation se termine dans tous les cas par une calcination à une température de 250 à 600°C.

Une des méthodes préférées dans la présente invention consiste à malaxer le gel humide d'alumine pendant quelques dizaines de minutes, puis à passer la pâte ainsi obtenue à travers une filière pour former des extrudés de diamètre compris de préférence entre 0,4 et 4 mm.

Le catalyseur renferme en outre une fonction hydrogénante. La fonction hydrodeshydrogénante est assurée par le molybdène et le cobalt. Elle peut être introduite dans le catalyseur à divers niveaux de la préparation et de diverses manières.

Elle peut être introduite en partie seulement ou en totalité au moment du malaxage avec le gel d'oxyde choisi comme matrice, le reste des élément(s) hydrogénant(s) étant alors introduit après malaxage, et plus généralement après calcination.

De façon préférée, le molybdène est introduit simultanément ou après le cobalt, quel que soit le mode d'introduction.

Elle peut être introduite de préférence par une ou plusieurs opérations d'échange ionique sur le support calciné, à l'aide de solutions contenant les sels précurseurs des métaux.

Elle peut être introduite par une ou plusieurs opérations d'imprégnation du support mis en forme et calciné, par une solution du ou des précurseurs de l'oxyde de cobalt lorsque le ou les précurseurs des oxydes de molybdène ont été préalablement introduits au moment du malaxage du support.

Dans le cas où les éléments sont introduits en plusieurs imprégnations des sels précurseurs correspondants, une étape de calcination intermédiaire du catalyseur devra être effectuée à une température comprise entre 250 et 600°C.

Le phosphore est introduit à n'importe quel moment de la préparation. Il peut être introduit seul ou en mélange avec le cobalt et/ou le molybdène. Il peut par exemple être introduit avant la peptisation de l'alumine. Il peut aussi, par exemple, être introduit sur l'extrudé d'alumine avec ou sans calcination intermédiaire. Il peut aussi être introduit en mélange avec le cobalt ou le molybdène en totalité ou en partie sur l'alumine sous forme extrudée avec ou sans calcination intermédiaire. Il peut aussi être introduit en totalité ou en partie avec le cobalt et le molybdène sur l'alumine sous forme extrudée avec ou sans calcination intermédiaire. Il peut aussi être introduit seul en dernier. Notons enfin que cette liste n'est qu'indicative puisqu'un grand nombre de variantes peuvent être imaginées.

Ces éléments métalliques étant introduits sous forme d'oxydes, ils doivent, pour être actifs, être sulfurés. Notons que toute méthode de sulfuration in-situ ou ex-situ est convenable.

L'invention a également pour objet un procédé d'hydrotraitement avec ce catalyseur.

Les charges traitées sont diverses et vont du naphta (point d'ébullition initial 80°C) au distillat sous vide ou au résidu sous vide.

La pression totale est comprise entre 0.5 et 20MPa, la température entre 200°C et 480°C et de préférence 260-450°C, la vitesse volumique horaire entre 20 et 0,05 h⁻¹ et le débit d'hydrogène entre 100 et 3000 litre par litre de charge. De préférence, la pression partielle d'hydrogène sera relativement basse, étant de 0,5-6MPa, ou mieux 0,5-5,5MPa. Pour prendre deux cas extrêmes, l'hydrodésulfuration d'une coupe naphta aura lieu à une pression de 1,5MPa, une température de 300°C, une vitesse volumique horaire de 10h⁻¹ et un débit d'hydrogène égal à 100l/l de charge tandis que l'hydrodésulfuration d'un résidu sous vide désasphalté aura lieu à une pression de 20MPa, une température de 390°C, une vitesse volumique horaire de 0,5h⁻¹ et un débit d'hydrogène de 1500l/l de charge.

L'exemple suivant illustre la présente invention sans toutefois en limiter la portée.

Nous avons fabriqué un support à base d'alumine en grande quantité. Pour ce faire, nous avons utilisé le gel commercial SB3 commercialisé par la société Condea. Ce gel a été mélangé à de l'eau et à de l'acide nitrique puis malaxé pendant 15 minutes. A l'issue de ce malaxage, la pâte obtenue est passée à travers une filière cyclindrique de façon à obtenir des extrudés de diamètre égal à 1.2mm. Les extrudés sont ensuite séchés pendant une nuit à 120°C puis calciné à 550°C pendant 2 heures sous air humide contenant 7,5% volume d'eau.

### Exemple 1 : catalyseur C1 non conforme

Nous avons ajouté du cobalt, du molybdène et du phosphore sur le support extrudé. Les sels de ces trois éléments sont introduits simultanément par imprégnation à sec du support. Le sel de cobalt utilisé est le nitrate de cobalt Co(NO₃)₂, 6H₂O. Le sel de molybdène est l'heptamolybdate d'ammonium Mo₇O₂₄(NH₄)₆, 4H₂O et le phosphore est introduit sous forme de H₃PO₄. Après imprégnation à sec, les extrudés sont séchés une nuit à 120°C puis calciné à 550°C pendant 2 heures sous air humide contenant 7,5% volume d'eau. Les teneurs finales en oxydes de métaux et les principales caractéristiques physico-chimiques sont alors les suivantes :

| | |
|---|---|
| MoO₃ (%poids) | 18,2 |
| CoO (%poids) | 4,1 |
| P₂O₅ (%poids) | 1,9 |
| S_{BET} (m²/g) | 205 |
| ESH(MPa) | 1,3 |

### Exemple 2 : catalyseur C2 conforme

Nous avons ajouté du cobalt, du molybdène et du phosphore sur le support extrudé. Les sels de ces trois éléments sont introduits simultanément par imprégnation à sec du support. Le sel de cobalt utilisé est le nitrate de cobalt Co(NO₃)₂, 6H₂O. Le sel de molybdène est l'heptamolybdate d'ammonium Mo₇O₂₄(NH₄)₆, 4H₂O et le phosphore est introduit sous forme de H₃PO₄. Après imprégnation à sec, les extrudés sont séchés une nuit à 120°C puis calciné à 550°C pendant 2 heures sous air humide contenant 7,5% volume d'eau. Les teneurs finales en oxydes de métaux et les principales caractéristiques physico-chimiques sont alors les suivantes :

| | |
|---|---|
| MoO₃ (%poids) | 18,2 |
| CoO(%poids) | 4,1 |
| P₂O₅ (%poids) | 5,7 |
| S_{BET} (m²/g) | 170 |
| ESH (MPa) | 1,8 |

### Exemple 3 : catalyseur C3 non conforme pour référence

Nous avons ajouté du cobalt et du molybdène sur le support extrudé. Les sels de ces trois éléments sont introduits simultanément par imprégnation à sec dû support. Le sel de cobalt utilisé est le nitrate de cobalt Co(NO₃)₂, 6H₂O et le sel de molybdène est l'heptamolybdate d'ammonium Mo₇O₂₄(NH₄)₆, 4H₂O. Après imprégnation à sec, les extrudés sont séchés une nuit à 120°C puis calciné à 550°C pendant 2 heures sous air humide contenant 7,5% volume d'eau. Les teneurs finales en oxydes de métaux et les principales caractéristiques physico-chimiques sont alors les suivantes :

| | |
|---|---|
| MoO₃ (%poids) | 18,2 |
| CoO (%poids) | 4,1 |
| P₂O₅ (%poids) | 0 |
| S_{BET} (m²/g) | 235 |
| ESH (MPa) | 1,2 |

### Exemple 4 : essai comparatif : hydrogénation du toluène

L'activité des trois catalyseurs précédemment décrits a été comparée en hydrogénation du toluène. Avant utilisation, les catalyseurs sont sulfurés in-situ. La réaction à lieu à 3MPa et une température de 300°C. La charge est constituée de toluène auquel on ajoute 2% poids de DMDS. Les activités relatives sont reportées dans le tableau ci-dessous. Nous avons choisi comme référence le catalyseur C3 qui ne contient pas de phosphore.

| Catalyseur | Activité |
|---|---|
| C1 | 126 |
| C2 | 152 |
| C3 | 100 |

Comme on peut le constater, les deux catalyseurs contenant du phosphore sont plus actif que le catalyseur sans phosphore. De plus, on notera que le catalyseur qui contient une forte proportion de phosphore est notablement plus actif que celui en contentant peu.

### Exemple 5 : essai comparatif : HDS de GOSR

Les trois catalyseurs précédemment décrits ont été comparés sur charge réelle. Avant utilisation, les catalyseurs sont sulfurés in-situ. Nous avons mesuré l'activité hydrodésulfurante sur un gas-oil de distillation directe dont les principales caractéristiques sont données dans le tableau suivant :

| | |
|---|---|
| Densité à 15°C | 0,856 |
| Indice de Réfraction à 20°C | 1,4564 |
| Viscosité à 50°C | 3,72 cSt = 3,72.10⁻⁶m²/s |
| Soufre | 1,57%poids |
| Distillation Simulée | |
| PI | 153°C |
| 5% | 222°C |
| 50% | 315°C |
| 95% | 415°C |
| PF | 448°C |

Le test d'HDS de gas-oil est mené en lit fixe dans les conditions opératoires suivantes :

| | |
|---|---|
| Pression totale | 3 MPa |
| Vitesse Volumique Horaire | 2h-1 |
| Température | 310, 340 et |
| | 360°C |
| Débit d'hydrogène | 250l/l de charge |

Les performances catalytiques des trois catalyseurs aux trois températures de réaction sont données dans le tableau suivant. Elles sont exprimées en activité, en prenant comme référence -pour chaque température- celle du catalyseur C3 qui ne contient pas de phosphore.

| Catalyseur | 310°C | 340°C | 360°C |
|---|---|---|---|
| C1 | 117 | 115 | 118 |
| C2 | 123 | 128 | 129 |
| C3 | 100 | 100 | 100 |

Il apparaît que le catalyseur C2 selon l'invention est nettement plus actif.

Le catalyseur selon l'invention convient donc particulièrement pour l'hydrodésulfuration.

## Revendications

1. Catalyseur à base d'alumine contenant, exprimés en teneurs pondérales en oxydes, 2-10% poids d'oxyde de cobalt CoO, de 10-30% poids d'oxyde de molybdène MoO₃ et de 4-10% d'oxyde de phosphore P₂O₅, qui présente une surface BET comprise entre 100-300m²/g, un écrasement ESH . supérieur à 1,4MPa, un diamètre moyen de pores compris entre 8-11nm, le volume poreux des pores de diamètre supérieur à 14nm est inférieur à 0.08ml/g, le volume des pores de diamètre inférieur à 8nm au plus égal à 0.05ml/g, le volume des pores de diamètre compris entre 8 et 14nm est compris entre 0,20ml/g et 0,8ml/g, et 20-60% du volume poreux total est dans les pores de diamètre 10-13nm, et moins de 10% du volume poreux total est dans les pores de diamètre supérieur à 25nm.

2. Catalyseur selon l'une des revendications précédentes, dans lequel la teneur en P₂O₅ est de 4,5-8,0%.

3. Catalyseur selon l'une des revendications précédentes, dans lequel la teneur en P₂O₅ est de 5,6-8,0%.

4. Catalyseur selon l'une des revendications précédentes, dans lequel la teneur en CoO est de 3,5-7,0% et en MoO₃ de 10,0-18,9%.

5. Catalyseur selon l'une des revendications précédentes, préparé par imprégnation de la matrice calcinée à base d'alumine avec la (les) solution(s) de cobalt, molybdène et l'acide phosphorique, suivie d'un séchage et d'une calcination sous air humide.

6. Procédé d'hydrotraitement de charges pétrolières avec un catalyseur selon l'une des revendications 1 à 5, opérant à une température de 200-480°C, sous une pression de 0,5-20MPa, avec une vitesse volumique horaire de 0,05-20h⁻¹ et un débit d'hydrogène de 100-3000l/l de charge.

7. Procédé selon la revendication 6 opérant entre 0,5 et 6MPa.

8. Procédé selon l'une des revendications 6 ou 7 dans lequel l'hydrotraitement est une hydrodésulfuration.

9. Procédé selon l'une des revendications 6 ou 8, dans lequel la température est de 260-450°C, la pression partielle d'hydrogène de 0,5-6Mpa, la vitesse volumique horaire de 0,05-20h⁻¹ et le débit d'hydrogène de 100-3000l/l de charge.

10. Procédé selon l'une des revendications 6 à 9, dans lequel la charge est un distillat sous vide.

11. Procédé selon l'une des revendications 6 à 10, dans lequel la charge est un gas-oil de distillation directe.

12. Procédé selon l'une des revendications 6 à 9, dans lequel la charge est un naphta.

## Patentansprüche

1. Katalysator auf Aluminiumoxidbasis, der ausgedrückt in Gewichtsgehalten an Oxiden 2-10 Gew.-% Kobaltoxid, CoO, 10-30% Molybdänoxid MoO₃ und 4-10 % Phosphoroxid P₂O₅ enthält, der eine spezifische BET-Oberfläche zwischen 100-300m²/g aufweist, einen Bruchwert ESH über 1,4 MPa, einen mittleren Porendurchmesser zwischen 8-11nm, wobei das Porenvolumen der Poren mit einem Durchmesser über 14 nm kleiner als 0,08ml/g ist, das Porenvolumen der Poren mit einem Durchmesser unter 8 nm höchstens gleich 0,05 ml/g ist, das Porenvolumen der Poren mit einem Durchmesser zwischen 8 und 14 nm zwischen 0,20 ml/g und 0,8 ml/g liegt und 20-60% des Gesamtporenvolumens in den Poren mit 10-13nm Durchmesser vorliegt und wenigstens 10% des Gesamtporenvolumens in den Poren eines Durchmessers über 25nm vorliegt.

2. Katalysator nach einem der vorhergehenden Ansprüche, bei dem der P₂O₅-Gehalt 4,5-8,0% ist.

3. Katalysator nach einem der vorhergehenden Ansprüche, bei dem der P₂O₅-Gehalt 5,6-8,0% ist.

4. Katalysator nach einem der vorhergehenden Ansprüche, bei dem der Gehalt an CoO 3,5-7,0% und an MoO₃ 10,0-18,9% ist.

5. Katalysator nach einem der vorhergehenden Ansprüche, hergestellt durch Imprägnierung der kalzinierten Matrix auf Aluminiumoxidbasis mit der (den) Lösung(en) von Kobalt, Molybdän und Phosphorsäure, gefolgt von einer Trocknung und einer Kalzinierung unter trockener Luft.

6. verfahren zum Hydrotreatment von Erdölbeschickungen mit einem Katalysator nach eine der Ansprüche 1 bis 5, das bei einer Temperatur von 200-480°C unter einem Druck von 0,5-20 MPa mit einer stündlichen Volumengeschwindigkeit von 0,05-20 h⁻¹ und einem Wasserstoffdurchsatz von 100-3000l/l Beschickung arbeitet.

7. Verfahren nach Anspruch 6, das zwischen 0,5 und 6 MPa arbeitet.

8. Verfahren nach einem der Ansprüche 6 oder 7, bei dem das Hydrotreatment eine Hydrierentschwefelung ist.

9. Verfahren nach einem der Ansprüche 6 oder 8, bei dem die Temperatur 260-450°C, der Wasserstoffpartialdruck 0,5-6MPa, die stündliche Volumengeschwindigkeit 0,05-20 h⁻¹ und der Wasserstoffdurchsatz 100-3000l/l Beschickung ist.

10. Verfahren nach einem der Ansprüche 6 bis 9, bei dem die Beschickung ein Vakuumdestillat ist.

11. Verfahren nach einem der Ansprüche 6 bis 10, bei dem die Beschickung ein Dieselöl einer direkten Destillation ist.

12. Verfahren nach einem der Ansprüche 6 bis 9, bei dem die Beschickung ein Naphta ist.

## Claims

1. An alumina based catalyst containing, expressed as the oxide content by weight, 2-10% by weight of cobalt oxide CoO, 10-30% by weight of molybdenum oxide MoO₃ and 4-10% of phosphorous oxide P₂O₅, with a BET surface area in the range 100-300 m²/g, a crushing strength CSH of more than 1.4 MPa, and an average pore diameter in the range 8-11 nm, the pore volume of pores with a diameter of more than 14 nm being less than 0.08 ml/g, the volume of pores with a diameter of less than 8 nm being at most 0.05 ml/g, the volume of pores with a diameter which is in the range 8 to 14 nm being in the range 0.20 ml/g to 0.8 ml/g, and 20-60% of the total pore volume is in pores with diameter in the range 10-13 nm and less than 10 % of the total pore volume is in pores with diameter greater than 25 nm.

2. A catalyst according to the preceding claim, in which the P₂O₅ content is 4.5-8.0%.

3. A catalyst according to any one of the preceding claims, in which the P₂O₅ content is 5.6-8.0%.

4. A catalyst according to any one of the preceding claims, in which the CoO content is 3.5-7.0% and the MoO₃ content is 10.0-18.9%.

5. A catalyst according to any one of the preceding claims, prepared by impregnating a calcined alumina based matrix with solution(s) of cobalt, molybdenum and phosphoric acid, followed by drying and calcining in moist air.

6. A process for hydrotreatment of petroleum feeds using a catalyst according to any one of claims 1 to 5, operating at a temperature of 200-480°C, at a pressure of 0.5-20 MPa, with an hourly space velocity of 0.05-20 h⁻¹ and a hydrogen flow rate of 100-3000 l/l of feed.

7. A process according to claim 6, carried out between 0.5 and 6 MPa.

8. A process according to claim 6 or claim 7, in which the hydrotreatment is hydrodesulfurisation.

9. A process according to claim 6 or claim 8, in which the temperature is in the range 260-450°C, the hydrogen partial pressure is in the range 0.5-6MPa, the hourly space velocity is in the range 0.05-20 h-1 and the hydrogen flow rate is in the range 100-3000 l/l of feed.

10. A process according to one of the claims 6 to 9, in which the feed is a vacuum distillate.

11. A process according to one of the claims 6 to 10, in which the feed is a straight run gasoil.

12. A process according to one of the claims 6 to 9, in which the feed is a naphta.
